# EUROPÄISCHE PATENTANMELDUNG

(11) **EP 4 717 996 A1**
(43) Veröffentlichungstag der Anmeldung: **01.04.2026**
(21) Anmeldenummer: 25203222.2
(22) Anmeldetag: 19.09.2025
(51) Int. Cl.: F24H 1/20, F24H 9/20, F24H 15/144, F24H 15/156, F24H 15/164, F24H 15/174, F24H 15/223, F24H 15/37, G05D 23/00, H05B 1/02

(54) **ELEKTRISCHER WARMWASSERBEREITER, WARMWASSERBEREITUNGSSYSTEM UND VERFAHREN ZUR REGELUNG EINES WARMWASSERBEREITUNGSSYSTEMS**

(30) Priorität: 27.09.2024 AT 507892024
(71) Anmelder: Austria Email AG, 8720 Knittelfeld (AT)
(72) Erfinder: STOCKER, Frank, 8740 Zeltweg (AT)
(74) Vertreter: SONN Patentanwälte GmbH & Co KG

(57) **Zusammenfassung**

Elektrischer Warmwasserbereiter (1) aufweisend einen Aufnahmebehälter (1A) für Wasser, zumindest ein erstes Heizelement (2) und ein zweites Heizelement (3) zum Aufheizen von im Aufnahmebehälter (1) aufgenommenem Wasser, einen ersten elektrischen Heizkreis (4), insbesondere verbindbar mit einer alternativen elektrischen Energiequelle (5), und einen zweiten elektrischen Heizkreis (6), insbesondere verbindbar mit einem öffentlichen Stromnetz (7, und eine Schalteinrichtung (8), wobei die Schalteinrichtung (8) dazu eingerichtet ist, zumindest das erste Heizelement (2) und das zweite Heizelement (3) jeweils dem ersten elektrischen Heizkreis (4) oder dem zweiten elektrischen Heizkreis (5) oder keinem Heizkreis zuzuschalten.

## Beschreibung

Die Erfindung betrifft einen elektrischen Warmwasserbereiter aufweisend einen Aufnahmebehälter für Wasser, zumindest ein erstes Heizelement und ein zweites Heizelement zum Aufheizen von im Aufnahmebehälter aufgenommenem Wasser, zumindest einen ersten elektrischen Heizkreis und einen zweiten elektrischen Heizkreis.

Weiters betrifft die Erfindung ein Warmwasserbereitungssystem mit einem elektrischen Warmwasserbereiter, sowie ein Verfahren zur Regelung eines Warmwasserbereitungssystems.

Elektrische Warmwasserbereiter (auch als "Boiler" bezeichnet) der eingangs erwähnten Art werden typischerweise in Haushalten zum Aufbereiten und Speichern von Warmwasser eingesetzt. Typischerweise wird einem thermisch von der Umwelt isolierten Aufnahmebehälter Frischwasser zugeführt, das folglich mittels eines oder mehrerer Heizelemente beheizt wird. Die Heizelemente sind typischerweise elektrische Widerstände die mit elektrischem Strom betrieben werden. Das Zuführen von Wärmeenergie wird im Allgemeinen als Beladen bezeichnet. Das somit erhaltene Warmwasser kann im Aufnahmebehälter gespeichert werden und je nach Bedarf für Haushaltszwecke entnommen werden. Eine Entnahme von Warmwasser (und somit auch von thermischer Energie) wird auch als Zapfung bezeichnet.

Zunehmend werden Wohnhäuser auch mit lokalen alternativen Energiequellen, wie PV-Anlagen oder auch (privaten) Windkraftanlagen ausgestattet, um den Energiebedarf von Haushalten zumindest teilweise mit nachhaltiger Energie abzudecken. Erzeugungsanlagen von alternativen Energien wie bspw. Photovoltaik- oder Windkraftanlagen, sind durch ihre diskontinuierliche und fluktuierende Stromproduktion gekennzeichnet. Ein Nachteil alternativer Energiequellen ist, dass die zukünftige Leistung nur sehr ungenau vorhergesagt werden kann. Beispielsweise hängt der von einer PV-Anlage produzierte Strom naturgemäß von der Sonneneinstrahlung und somit vom lokalen Wetter ab. Ähnliches gilt für Wind- und bis zu einem gewissen Grad auch für Wasserkraft.

Die Beladung eines elektrischen Warmwasserbereiters mit Strom aus nachhaltigen Energiequellen bietet sich besonders an, da der Warmwasserspeicher kaum von einer momentanen Heizleistung abhängt, sondern lediglich der aufsummierte Energieinhalt bzw. die erreichte Temperatur des Warmwassers relevant ist. Der Warmwasserspeicher kann auch als Energiespeicher betrachtet werden.

Typischerweise wird Warmwasserbereitern täglich zu gleichen oder zumindest ähnlichen Zeiten Warmwasser entnommen. Beispielsweise besteht vielfach in den Morgen- und Abendstunden vermehrter Bedarf an Warmwasser, während in den Nachtstunden kaum oder kein Bedarf an Warmwasser besteht. Es ist daher möglich und auch zweckmäßig individuelle Bedarfszeitpunkte zu definieren, zu denen die Temperatur des Warmwassers im Warmwasserbereiter über einer bestimmten Mindestschwelle liegen muss, um beispielsweise genügend Warmwasser für einen Duschgang bereitstellen zu können.

Durch die mangelnde Planbarkeit der erzeugten Leistung nachhaltiger Energiequellen können Warmwasserbereiter typischerweise nicht ausschließlich mittels nachhaltiger Energiequellen beladen werden. Zusätzlich zu der oder den alternativen Energiequellen kommt daher eine Beladung mittels des öffentlichen Stromnetztes in Frage, das aufgrund (zusätzlicher) konventioneller und besser vorhersehbarer Energiequellen eine hohe Stabilität aufweist und zu einer hohen Planbarkeit führt. Die Beladung mittels Netzstrom kann als Nachheizen bezeichnet werden. Nachteilig am Nachheizen mit Netzstrom ist, dass dieser einen vergleichsweisen höheren CO₂-Fußabdruck aufweist und andererseits schon aufgrund der Netzkosten zu einer finanziellen Mehrbelastung für den Verbraucher führt. Es ist daher ein typisches Ziel, die Leistung lokaler und/oder nachhaltiger Energiequellen möglichst vollständig (lokal) zu verwenden (d.h. den Eigenverbrauch zu maximieren) und den Zukauf elektrischer Leistung aus dem allgemeinen Stromnetz zu minimieren.

Da die Stromproduktion aus alternativen Energiequellen nicht oder nur sehr ungenau prognostiziert werden und daher keine gesicherte Aussage über den künftigen Ertrag daraus abgeleitet werden kann, wird gemäß derzeitigem Stand der Technik die Nachheizung zumeist zu einem festen Zeitpunkt gestartet, um die Komfortvorgaben (d.h. Bedarfszeitpunkte und Bedarfstemperaturen) jedenfalls einhalten zu können. Beispielsweise kann dazu die Nachheizung über eine externe Einrichtung, bspw. durch eine Zeitschaltuhr, aktiviert werden. Dabei ist die Versorgung mit Netzstrom so lange gesperrt, bis die Zeitschaltung die Versorgung freigibt. Dadurch wird der Warmwasserbereiter mit Volllast der Nachheizung bis zur Erreichung der Zieltemperatur geladen.

Derartige zeitlich starre Lösungen haben den Nachteil, dass sie eben zu einem festen Zeitpunkt aktiviert werden, unabhängig davon, ob noch Strom aus alternativen Energiequellen verfügbar ist. Beispielsweise kann die alternative Energieproduktion während eines wechselhaften trüben oder windstillen Tages unzureichend sein und der Warmwasserbereiter kann daher innerhalb der Zeitspanne bis zum Bedarfszeitpunkt nicht ausreichend beladen werden. Eine starre Nachheizung ab dem Bedarfszeitpunkt würde in diesem Fall einen weiteren möglichen alternativen Energieeintrag ausschließen und stattdessen den Warmwasserbereiter mit (teurem) Netzstrom laden. Des Weiteren ist eine flexible Gestaltung des Kundenkomforts bei gleichzeitiger optimaler Ausnutzung des alternativen Energieangebotes nicht möglich.

Eine weitere Möglichkeit besteht darin den Nachheizzeitpunkt in Abhängigkeit der Nutzungsgewohnheit des Nutzers festzulegen. Dieses als "Smart Control" bezeichnete Verfahren lernt durch einen hinterlegten Algorithmus über einen längeren Zeitraum das Nutzerverhalten kennen und kann aus den so gewonnenen Daten einen Aufheizzeitpunkt ableiten, mit dem die Erreichung der Komfortziele möglich werden. Je konservativer das Nutzerverhalten ist, das heißt, je reproduzierbarer die Daten sind, desto genauer kann das Verfahren die Gewohnheiten nachbilden. Nachteilig daran ist, dass nach jeder Änderung des Nutzerverhaltens der gesamte Lernprozess wiederholt werden muss. Nachdem das Verfahren aber erst nach dem Lernprozess wirksam ist, wirkt sich jede neue Lernphase negativ auf den Eigenverbrauch (und ggf. auf den Nutzkomfort) aus.

Eine weitere Möglichkeit besteht darin, die Nachheizung in Abhängigkeit des Strompreises des Netzstroms zu starten. Die Beladung wird dann üblicherweise durch das jeweilige Energieversorgungsunternehmen eingeleitet, wenn der Strompreis niedrig ist. Warmwasserbereiter und -speicher können über einen Rundsteuerempfänger aktiviert werden. Nachteilig wirkt sich dabei die Fremdbestimmung auf den Kundenkomfort aus. Wenn bspw. der Speicher durch alternative Energieeinspeisung nur unzureichend aufgeladen ist und die Nachheizung aufgrund des Strompreises zu spät erfolgt, kann die Differenz zu den Komfortansprüchen nicht gedeckt werden. Eine Abdeckung eines allfälligen Mehrbedarfs durch den Nutzer ist nicht möglich. Da die Beladung ohne Rücksicht auf den tatsächlichen Komfortbedarfszeitpunkt stattfindet, können große zeitliche Spannen bis zur Inanspruchnahme des Warmwassers auftreten. Innerhalb dieser Zeiträume sind dann die Speicher vollgeladen und verlieren bis zum tatsächlichen Bedarfszeitpunkt Wärmeenergie durch Wärmeverluste, die wiederum (mittels Netzstrom) kompensiert werden müssten.

Um zumindest das Problem der Unterversorgung infolge einer zu späten Netzstromnachladung bei gleichzeitiger Minderbeladung durch alternativ produzierte Energie entschärfen zu können, ist es möglich, eine gewisse Energiemenge permanent zu bevorraten. Somit hat der Nutzer zumindest diese Energiemenge in Form von Warmwasser im Bedarfsfall zur Verfügung. Ein Beispiel dafür offenbart die AT 522 369 B1. Hierin wird vorgeschlagen, eine permanente Mindestkomfortbevorratung in einem oberen Speichervolumen vorzunehmen und in unterhalb liegende Bereiche des Auffangbehälters Energie aus alternativen Energiequellen (z.B. Photovoltaikenergie) einzuspeisen. Während die Heizung im Komfortbereich nur mit Netzstrom versorgt wird, sind die Heizungen im unteren Bereich entweder mit PV-Strom oder mit Netzstrom zu versorgen. Nachteilig bei dieser Ausführung ist, dass durch die permanente Komfortbevorratung Netzstrom auch in Zeiten eingespeist wird, in der PV-Energie verfügbar ist. Durch die Bevorratung wird ein Teil des gesamten nutzbaren Speichervolumens durch Energie aus dem Netz belegt, sodass nicht das ganze Volumen zur PV-Nutzung zur Verfügung steht. Darüber hinaus sind die Energieverluste durch die permanente Bevorratung erhöht, die zudem immer wieder durch Netzstrom ausgeglichen werden müssen. Ebenso nachteilig ist der von der tatsächlichen Wettersituation entkoppelte, fest vorgegebene Startpunkt der Nachheizung, der zudem nutzerspezifische Interessen außer Acht lässt.

Zusammenfassend kann festgestellt werden, dass zur Nutzung von alternativen Energien in Warmwasserspeichern das Hauptaugenmerk zwar auf die optimale Leistungsaufnahme gerichtet ist, währenddessen jedoch die Maximierung der Zeitdauer zur ausschließlichen Nutzung von alternativ erzeugter Energie unter gleichzeitiger Wahrung sämtlicher Komfortvorgaben noch nicht zufriedenstellend gelöst ist. Insbesondere ist der (maximale) Zeitrahmen, innerhalb dessen der alternativ erzeugte Strom bei komfortorientierten Geräten (insbesondere bei Warmwasserspeichern) genutzt werden kann, von der Wahl des Startzeitpunktes für die Nachheizung abhängig.

Es ist daher Aufgabe der Erfindung die Nachteile des Stands der Technik zumindest zu lindern oder vorzugsweise gänzlich zu beseitigen. Insbesondere ist es Aufgabe der Erfindung, einen elektrischen Warmwasserbereiter, ein Warmwasserbereitungssystem und ein Verfahren zur Regelung eines Warmwasserbereitungssystems bereitzustellen, die einen hohen Grad an Eigenverbrauch alternativer elektrischer Energie und eine niedrige Nachheizung gewährleisten ohne dabei den Komfort des Endverbrauchers zu beeinträchtigen.

Gelöst wird die erfindungsgemäße Aufgabe mit einem elektrischen Warmwasserbereiter aufweisend:
- einen Aufnahmebehälter für Wasser;
- zumindest ein erstes Heizelement und ein zweites Heizelement zum Aufheizen von im Aufnahmebehälter aufgenommenem Wasser;
- einen ersten elektrischen Heizkreis, insbesondere verbindbar mit einer alternativen elektrischen Energiequelle, und einen zweiten elektrischen Heizkreis, insbesondere verbindbar mit einem öffentlichen Stromnetz; und
- eine Schalteinrichtung, wobei die Schalteinrichtung dazu eingerichtet ist, zumindest das erste Heizelement und das zweite Heizelement jeweils dem ersten elektrischen Heizkreis oder dem zweiten elektrischen Heizkreis oder keinem Heizkreis zuzuschalten.

Ferner wird die Aufgabe gelöst durch ein Warmwasserbereitungssystem mit einem erfindungsgemäßen elektrischen Warmwasserbereiter mit einer Steuerungseinheit zur Steuerung der Schalteinrichtung, wobei der elektrische Warmwasserbereiter eine Temperaturmesseinrichtung zur Erfassung einer Wassertemperatur T₀ von im Aufnahmebehälter aufgenommenem Wasser aufweist, wobei die Steuerungseinheit dazu eingerichtet ist, die Schalteinrichtung in Abhängigkeit der erfassten Wassertemperatur T₀ zu steuern.

Ebenfalls gelöst wird die erfindungsgemäße Aufgabe durch ein Verfahren zur Regelung eines erfindungsgemäßen Warmwasserbereitungssystems, mit den folgenden Schritten:
- Erfassen der aktuellen Wassertemperatur T₀ von im Aufnahmebehälter aufgenommenem Wasser;
- Vergleichen der erfassten Wassertemperatur T₀ mit einer Einschaltkurve T_{ref}(t);
- Steuern der Schalteinrichtung in Abhängigkeit des Vergleichs der Wassertemperatur T₀ mit der Einschaltkurve T_{ref}(t).

Der elektrische Warmwasserbereiter kann auch als Boiler bezeichnet werden. Der Warmwasserbereiter (d.h. der elektrische Warmwasserbereiter) weist einen Aufnahmebehälter für Wasser auf. Der Aufnahmebehälter kann im Wesentlichen zylinderförmig oder quaderförmig ausgeführt sein. Der Aufnahmebehälter kann außenseitig zumindest teilweise, insbesondere vollständig, eine Wärmeisolierung, insbesondere einen Hart- oder Weichschaum, einen Vliesstoff, eine Verbundisolierung oder eine Vakuumisolierung, aufweisen. Der Aufnahmebehälter kann eine Zufuhrleitung für Frischwasser und eine Entnahmeleitung für Warmwasser aufweisen. Der Aufnahmebehälter kann dazu eingerichtet sein, an einer Wand befestigt zu werden und/oder auf einem Boden stehend gelagert zu werden. Der Aufnahmebehälter kann ein Aufnahmevolumen zur Aufnahme von Wasser von zumindest 50 dm³ (Kubikdezimeter), vorzugsweise zumindest 100 dm³, besonders bevorzugt zumindest 200 dm³ oder zumindest 400 dm³, aufweisen. Das Innenvolumen kann beispielsweise zwischen 100 dm³ und 3000 dm³ liegen.

Der elektrische Warmwasserbereiter weist zumindest ein erstes Heizelement und ein zweites Heizelement zum Aufheizen von im Aufnahmebehälter aufgenommenem Wasser auf. Das erste und/oder das zweite Heizelement kann beispielsweise einen Heizstab aufweisen oder ein Heizstab sein. Das erste Heizelement und das zweite Heizelement können innerhalb des Aufnahmebehälters angeordnet sein und in direktem Kontakt mit im Aufnahmebehälter aufgenommenen Wasser sein. Optional kann zumindest ein weiteres Heizelement vorgesehen sein. Das erste Heizelement kann eine maximale Heizleistung in einem Bereich von 0,1 kW bis 10 kW, vorzugsweise in einem Bereich von 0,2 kW bis 5 kW, besonders bevorzugt in einem Bereich von 0,5 kW bis 3 kW aufweisen. Das erste Heizelement kann eine maximale Heizleistung in einem Bereich von 0,1 kW bis 10 kW, vorzugsweise in einem Bereich von 0,2 kW bis 5 kW, besonders bevorzugt in einem Bereich von 0,5 kW bis 3 kW aufweisen.

Der elektrische Warmwasserbereiter weist einen ersten elektrischen Heizkreis, insbesondere verbindbar mit einer alternativen elektrischen Energiequelle, und einen zweiten elektrischen Heizkreis, insbesondere verbindbar mit einem öffentlichen Stromnetz, auf. Der erste elektrische Heizkreis bzw. der zweite elektrische Heizkreis können auch als erster Heizkreis bzw. zweiter Heizkreis bezeichnet werden. Der Ausdruck "elektrischer Heizkreis" wird im Rahmen dieser Offenbarung synonym mit dem Ausdruck "Heizkreis" verwendet. Der erste und der zweite Heizkreis können elektrische Leitungen für elektrischen Strom aufweisen. Der erste elektrische Heizkreis kann beispielsweise mit einer alternativen elektrischen Energiequelle, wie einer PV-Anlage, verbunden sein. Der zweite elektrische Heizkreis kann mit einem öffentlichen Stromnetz verbunden sein. Somit ist es möglich den elektrischen Warmwasserbereiter mit alternativer (lokal erzeugter) Energie und/oder (konventionell erzeugter) Energie aus dem öffentlichen Stromnetz zu versorgen.

Der elektrische Warmwasserbereiter weist eine Schalteinrichtung auf, wobei die Schalteinrichtung dazu eingerichtet ist, zumindest das erste Heizelement und das zweite Heizelement jeweils dem ersten elektrischen Heizkreis oder dem zweiten elektrischen Heizkreis oder keinem Heizkreis zuzuschalten. Die Schalteinrichtung kann elektrische Schalter, insbesondere Analogschalter oder Halbleiterschalter, aufweisen. Die Schalteinrichtung kann steuerbar sein. Die Schalteinrichtung kann zumindest ein Relais aufweisen. Durch die Schalteinrichtung ist es möglich die zumindest zwei Heizelemente (d.h. zumindest das erste und das zweite Heizelement) unabhängig voneinander unterschiedlichen Heizkreisen zuzuordnen. Dadurch können die zumindest zwei Heizelemente letztlich unabhängig voneinander einer alternativen elektrischen Energiequelle (wie einer PV-Anlage) oder dem öffentlichen Stromnetz zugeordnet werden. Damit ist es beispielsweise möglich, den Warmwasserbereiter lediglich mit alternativer elektrischer Energie, lediglich mit (konventionell erzeugter, insbesondere fossiler) Energie aus dem öffentlichen Stromnetz, oder gleichzeitig mit beiden Energieformen zu betreiben und zu beladen. Vorteilhaft an dieser Lösung ist, dass alternative elektrische Energie auch parallel zu einer etwaigen Nachheizung mit Strom aus dem öffentlichen Stromnetz verwendet werden kann, indem die zumindest zwei Heizelemente entsprechend den jeweiligen Heizkreisen zugeordnet werden.

Durch die Schalteinrichtung ist es möglich, die einzelnen Heizelemente individuell einem der beiden Heizkreise (d.h. dem ersten oder dem zweiten Heizkreis) bedarfsgerecht zuzuordnen. Darüber hinaus können die zumindest zwei Heizelemente jeweils in beiden Heizkreisen beliebig kombiniert werden. Erfolgt das im mittels alternativ erzeugtem Strom gespeisten Heizkreis (beispielsweise im ersten Heizkreis), so ist eine leistungskonforme Verwertung der alternativ erzeugten Energie möglich (entspricht gestufter Leistungsabnahme). Im mit Netzstrom versorgtem Heizkreis (beispielsweise der zweite Heizkreis) kommt im Normalfall nur ein Heizelement, vorzugsweise das leistungsstärkste aus der Gesamtheit der zumindest zwei Heizelemente, zum Einsatz.

Beispielsweise können die zumindest zwei elektrischen Heizelemente dem ersten Heizkreis zugeschaltet sein, wobei der erste Heizkreis mit einer alternativen elektrischen Energiequelle verbunden ist. Somit ist es möglich, eine besonders große elektrische Leistung, die von der alternativen elektrischen Energiequelle erzeugt wird zur Beladung des elektrischen Warmwasserbereiters zu verwenden.

Beispielsweise können die zumindest zwei elektrischen Heizelemente dem zweiten Heizkreis zugeschaltet sein, wobei der zweite Heizkreis mit dem öffentlichen Stromnetz verbunden ist. Somit kann eine besonders große elektrische Leistung aus dem öffentlichen Stromnetz zur Beladung des elektrischen Warmwasserbereiters verwendet werden, beispielsweise um den elektrischen Warmwasserbereiter möglichst rasch, zuverlässig und vorhersehbar zu beladen.

Durch die hohe Flexibilität des elektrischen Warmwasserbereiters in Bezug auf mögliche Kombinationen der zumindest zwei Heizelemente kann ein besonders hoher Grad an Eigenverbrauch alternativer elektrischer Energie und eine besonders niedrige Nachheizung erreicht werden, ohne dabei den Komfort des Nutzers einzuschränken.

Optional kann das erste Heizelement eine größere Heizleistung aufweisen als das zweite Heizelement. Durch unterschiedliche Heizleistung der zumindest zwei Heizelemente können besonders viele Konfigurationen an zu den jeweiligen Heizkreisen zugeordneten Heizleistungen erreicht werden.

Die Schalteinrichtung kann optional eine erste Schalteinheit und eine zweite Schalteinheit umfassen, wobei die erste Schalteinheit dazu eingerichtet ist, zumindest das erste Heizelement und das zweite Heizelement einem von zumindest zwei Versorgungssträngen zuzuschalten oder von diesem zu trennen und wobei die zweite Schalteinheit dazu eingerichtet ist, die zumindest zwei Versorgungstränge jeweils dem ersten elektrischen Heizkreis oder dem zweiten elektrischen Heizkreis zuzuschalten. Die zumindest zwei Versorgungsstränge können zumindest teilweise innerhalb des elektrischen Warmwasserbereiters angeordnet sein. Die zumindest zwei Versorgungsstränge können eine elektrische Leitung aufweisen oder durch eine solche gebildet sein. Mittels der ersten Schalteinheit können die zumindest zwei Heizelemente unabhängig voneinander einem der zumindest zwei Versorgungsstränge zugeordnet werden oder gänzlich von den Versorgungssträngen getrennt werden. Mittels der zweiten Schalteinheit können die Versorgungsstränge unabhängig voneinander einer elektrischen Energiequelle (und daher unterschiedlichen elektrischen Energiequellen) zugeordnet werden.

Die Schalteinrichtung kann beispielsweise eine dritte Schalteinheit aufweisen, wobei die dritte Schalteinheit dazu eingerichtet ist, zumindest das erste Heizelement und das zweite Heizelement einem Nullleiter des ersten Heizkreises oder einem Nullleiter des zweiten Heizkreises zuzuschalten. Beispielsweise kann das erste Heizelement dem ersten elektrischen Heizkreis und einer PV-Anlage und das zweite Heizelement dem zweiten elektrischen Heizkreis und dem öffentlichen Stromnetz zugeschaltet sein. Mittels der dritten Schalteinheit kann folglich das erste Heizelement einem der PV-Anlage zugeordneten Nullleiter zugeschaltet werden und das zweite Heizelement einem Nullleiter des öffentlichen Stromnetzes zugeschaltet werden.

Das Warmwasserbereitungssystem weist einen erfindungsgemäßen elektrischen Warmwasserbereiter und eine Steuerungseinheit zur Steuerung der Schalteinrichtung auf, wobei der elektrische Warmwasserbereiter eine Temperaturmesseinrichtung zur Erfassung einer Wassertemperatur T₀ von im Aufnahmebehälter aufgenommenem Wasser aufweist, wobei die Steuerungseinheit dazu eingerichtet ist, die Schalteinrichtung in Abhängigkeit der erfassten Wassertemperatur T₀ zu steuern.

Die Steuerungseinheit kann mit der Schalteinrichtung verbunden sein, beispielsweise mittels eines Kabels oder einer drahtlosen Datenverbindung. Die Temperaturmesseinrichtung kann beispielsweise einen Temperatursensor, wie ein Thermoelement oder einen temperaturabhängigen Widerstand aufweisen. Der Temperatursensor kann beispielsweise dazu eingerichtet sein, in Kontakt mit im Aufnahmeraum aufgenommenem Warmwasser zu kommen. Die Steuerungseinheit kann die Schalteinrichtung auf Basis der erfassten Wassertemperatur steuern. Beispielsweise kann die Steuerungseinheit die Schalteinrichtung so steuern, dass die zumindest zwei Heizelemente jeweils mit einer alternativen elektrischen Energiequelle verbunden werden, wenn die ermittelte Wassertemperatur über einem Schwellwert, beispielsweise über einer vordefinierten minimalen Komforttemperatur, liegt. Damit kann ein (nicht notwendiges) Nachheizen mit Energie aus dem öffentlichen Stromnetz verhindert werden und eine maximale Leistung aus einer alternativen elektrischen Energiequelle zur Beladung des elektrischen Warmwasserbereiters verwendet werden. Die Steuerungseinrichtung kann dazu eingerichtet sein, alle Heizelemente von den Heizkreisen zu trennen, wenn das Warmwasser eine maximal zulässige Höchsttemperatur erreicht hat.

Die Schalteinrichtung kann in bidirektionaler Verbindung mit der Steuerungseinheit stehen, wobei die Schalteinrichtung dazu eingerichtet ist, Steuerbefehle zur Verschaltung zumindest des ersten Heizelements und des zweiten Heizelements von der Steuerungseinheit zu erhalten, wobei die Steuerungseinheit vorzugsweise dazu eingerichtet ist, Regelalgorithmen auszuführen.

Die Steuerungseinheit kann in bidirektionaler Verbindung mit der Schalteinrichtung stehen, d.h. Daten können von der Steuerungseinheit an die Schalteinrichtung übermittelt werden und umgekehrt. Die Steuerungseinheit kann dazu eingerichtet sein, Regelalgorithmen auszuführen, um Steuerbefehle zu ermitteln.

Die Steuerungseinheit kann optional mit einer externen Einheit in Verbindung stehen, wobei die externe Einheit dazu eingerichtet ist, Regelalgorithmen auszuführen und Steuerbefehle an die Steuerungseinheit zu übermitteln. Die Steuerungseinheit kann wiederum dazu eingerichtet sein, die Steuerbefehle an die Schalteinrichtung zu übermitteln. Die externe Einheit kann einen Prozessor aufweisen. Die externe Einheit kann einen Mikrocontroller aufweisen. Die externe Einheit kann örtlich getrennt von der Steuerungseinheit angeordnet sein. Die externe Einheit kann dazu eingerichtet sein, mehrere entsprechende Steuerbefehle an mehrere Steuerungseinheiten zu übermitteln. Die externe Einheit kann ein Energiemanager sein. Die externe Einheit kann optional auch eine virtuelle Plattform, beispielsweise eine Cloud, aufweisen oder sein.

Optional kann die Steuerungseinheit dazu eingerichtet sein, die Schalteinrichtung in Abhängigkeit der erfassten Wassertemperatur T₀ und einer Zieltemperatur Tₘᵢₙ zu einem Zeitpunkt tₛₒₗₗ zu steuern. Die Zieltemperatur Tₘᵢₙ kann die Komforttemperatur sein, die zum Zeitpunkt tₛₒₗₗ mindestens erreicht sein soll, beispielsweise um Komfortbedingungen des Verbrauchers zu erfüllen. Die Steuerungseinheit kann beispielsweise dazu eingerichtet sein, aus der (aktuellen) erfassten Wassertemperatur T₀ und dem aktuellen Zeitpunkt tᵢₛₜ zu extrapolieren, ob ein Nachheizen mit Strom aus dem öffentlichen Netz voraussichtlich notwendig sein wird, um die Komfortbedingung zu erfüllen, d.h. zumindest die Zieltemperatur Tₘᵢₙ zum (späteren) Zeitpunkt tₛₒₗₗ zu erreichen. Die Steuerungseinheit kann beispielsweise dazu eingerichtet sein, eine aktuelle Heizleistung des ersten Heizelements und des zweiten Heizelements zu ermitteln. Optional kann die Steuerungseinheit dazu eingerichtet sein, die Schalteinrichtung in Abhängigkeit der erfassten Wassertemperatur T₀, der Zieltemperatur Tₘᵢₙ zu einem Zeitpunkt tₛₒₗₗ, und der erfassten Heizleistung des ersten Heizelements und/oder des zweiten Heizelements zu steuern.

Optional kann die Steuerungseinheit dazu eingerichtet sein, die Wassertemperatur T₀ mit einer (vorgegebenen oder definierten) Einschaltkurve T_{ref}(t) zu vergleichen, wobei die Einschaltkurve T_{ref}(t) die Zieltemperatur Tₘᵢₙ zu dem Zeitpunkt tₛₒₗₗ und eine Ausgangstemperatur T_{A} zu einem Ausgangszeitpunkt t_{A} aufweist. Die Ausgangstemperatur T_{A} kann beispielsweise eine Temperatur von Frischwasser sein, das dem elektrischen Warmwasserbereiter zugeführt werden kann. Der Ausgangszeitpunkt t_{A} kann der Zeitpunkt der Zuführung des Frischwassers sein. Die Einschaltkurve T_{ref}(t) ist eine Funktion der Zeit t. Die Einschaltkurve T_{ref}(t) gibt an, wann zumindest ein Heizelement dem zweiten Heizkreis, der mit dem öffentlichen Netz verbunden ist, zugeschaltet werden muss, um selbst im Falle keiner erzeugten Energie aus einer alternativen Stromquelle (die mit dem ersten Heizkreis verbunden ist) die Komfortbedingungen zu erfüllen. Solange die erfasste Wassertemperatur T₀ über der Einschaltkurve T_{ref}(t) liegt, können beide bzw. alle Heizelemente dem ersten Heizkreis zugeschaltet sein, um den elektrischen Warmwasserbereiter ausschließlich mit Energie aus alternativen Quellen zu betreiben. Die Leistung aus alternativen Energiequellen kann (beispielsweise bedingt durch eine ungünstige Wetterlage) unzureichend sein, um die Zieltemperatur Tₘᵢₙ zum (späteren) Zeitpunkt tₛₒₗₗ mit Sicherheit erreichen zu können. Demnach kann es notwendig sein, ein Heizelement dem zweiten Heizkreis zuzuschalten und somit mit Leistung aus dem öffentlichen Netz nachzuheizen. Beispielsweise kann in diesem Fall das zweite Heizelement dem zweiten Heizkreis zugeschaltet werden, wobei das erste Heizelement dem ersten Heizkreis zugeschaltet bleibt. Damit kann parallel Energie aus der alternativen elektrischen Energiequelle und Energie aus dem öffentlichen Stromnetz eingebracht werden. Die Einschaltkurve T_{ref}(t) kann eine Gerade sein und eine bestimmte Steigung aufweisen. Die Steigung kann proportional der maximalen Heizleistung des ersten Heizelements und/oder des zweiten Heizelements sein. Die Steigung kann ferner von einem Volumen an Wasser in dem Aufnahmebehälter abhängen. Wenn die erfasste Wassertemperatur T₀ auf der Einschaltkurve T_{ref}(t) liegt oder kleiner ist als ein entsprechender Wert auf der Einschaltkurve T_{ref}(t), kann die Steuerungseinheit beispielsweise das zweite Heizelement dem zweiten elektrischen Heizkreis zuschalten.

Beispielsweise kann der erste Heizkreis mit einer alternativen elektrischen Energiequelle verbunden sein und der zweite Heizkreis mit einem öffentlichen Stromnetz verbunden sein. Optional kann der erste Heizkreis mit einer Energiequelle verbunden sein, deren erzeugte Leistung nicht exakt vorhergesagt werden kann, wobei der zweite Heizkreis mit einer Stromquelle verbunden sein kann, die eine im Wesentlichen konstante und im Wesentlichen beliebig hohe Leistung zur Verfügung stellen kann. Durch die Schaltbarkeit der zumindest zwei Heizelemente kann die von der alternativen elektrischen Energiequelle zur Verfügung gestellte Leistung möglichst vollständig verwendet werden, wobei nur im Bedarfsfall mit Strom aus dem öffentlichen Netz nachgeheizt wird, um Komfortbedingungen zu erfüllen.

Das Verfahren zur Regelung eines erfindungsgemäßen Warmwasserbereitungssystems weist die folgenden Schritte auf:
- Erfassen der aktuellen Wassertemperatur T₀ von im Aufnahmebehälter aufgenommenem Wasser;
- Vergleichen der erfassten Wassertemperatur T₀ mit einer Einschaltkurve T_{ref}(t);
- Steuern der Schalteinrichtung in Abhängigkeit des Vergleichs der Wassertemperatur T₀ mit der Einschaltkurve T_{ref}(t).

Vergleichen der erfassten Wassertemperatur T₀ mit der Einschaltkurve T_{ref}(t) kann insbesondere durch Vergleichen der erfassten Wassertemperatur T₀ mit einem Temperaturwert auf der Einschaltkurve T_{ref}(t) zum selben Zeitpunkt (d.h. mit einem aktuellen Wert der Einschaltkurve T_{ref}(t)) ausgeführt werden.

Beispielsweise kann zumindest das erste Heizelement dem zweiten Heizkreis zugeschaltet werden, wenn die aktuelle Wassertemperatur T₀ kleiner oder gleich einem aktuellen Wert der Einschaltkurve T_{ref}(t) ist.

Vorteilhafterweise sind keine Kenntnisse über zukünftige Einflüsse (z.B. über Prognosemodelle, Wetter etc.) oder Erfahrungswerte notwendig, da die Kenntnis eines aktuellen Messwerts (d.h. der aktuellen Wassertemperatur T₀) und ohnehin bekannter oder vordefinierter Größen wie der Einschaltkurve T_{ref}(t) ausreicht, um das erfindungsgemäße Verfahren auszuführen. Dadurch ist das Verfahren besonders robust und einfach einsetzbar.

Optional kann das Verfahren den folgenden weiteren Schritt aufweisen:
- wenn die aktuelle Wassertemperatur T₀ größer als ein aktueller Wert der Einschaltkurve T_{ref}(t) ist: Ermitteln eines späteren Startzeitpunkts in Abhängigkeit von der aktuellen Wassertemperatur T₀ und der Einschaltkurve T_{ref}(t), wobei zum späteren Startzeitpunkt die vorhergehenden Schritte des erfindungsgemäßen Verfahrens wiederholt werden.

Damit reicht es aus, die Wassertemperatur T₀ zu einzelnen Zeitpunkten t zu erfassen und mit der Einschaltkurve T_{ref}(t) zu vergleichen. Ein permanentes Erfassen der Wassertemperatur T₀ samt einem Vergleich mit der Einschaltkurve T_{ref}(t) könnte hingegen einen erhöhten Energiebedarf und Rechenaufwand bedeuten. Wenn die erfasste aktuelle Wassertemperatur T₀ über dem aktuellen Wert der Einschaltkurve T_{ref}(t) liegt, kann ein (späterer) Zeitpunkt gefunden werden, an dem die Einschaltkurve T_{ref}(t) den aktuellen Wert der Wassertemperatur T₀ aufweist. Dieser spätere Zeitpunkt kann der spätere Startzeitpunkt sein. Selbst im Fall, dass bis zu diesem späteren Startzeitpunkt kein Strom aus einer mit der ersten Heizkreis verbundenen alternativen elektrischen Energiequelle zur Verfügung steht, kann die Zieltemperatur Tₘᵢₙ zum Zeitpunkt tₛₒₗₗ erreicht werden, indem beispielsweise das zweite Heizelement dem zweiten Heizkreis zugeschaltet wird und somit beispielsweise mit Strom aus dem öffentlichen Netz nachgeheizt wird. Das zweite Heizelement kann dennoch weiterhin mit dem ersten Heizkreis verbunden sein, um parallel einen etwaigen Energieeintrag aus der alternativen elektrischen Energiequelle zu ermöglichen.

So lange alternativ produzierter Strom genutzt werden kann und die Erreichung der Komfortbedingungen gewährleistet ist, sind und bleiben alle Heizelemente dem ersten Heizkreis zugeordnet, um eine möglichst leistungskonforme Verwertung des alternativ produzierten Stromes zu ermöglichen. Nur in den Fällen, wo eine Nachheizung mit Netzstrom zur sicheren Erreichung der Komfortziele erforderlich ist, wird das leistungsstärkste Heizelement der zumindest zwei Heizelemente temporär dem zweiten Heizkreis zugeordnet. Sobald die Nachheizung nicht mehr notwendig ist, wird das Heizelement wieder dem erstem Heizkreis zugeschaltet.

Durch den Vergleich mit der Einschaltkurve T_{ref}(t) in Verbindung mit der daraus möglichen Verschiebung des Startzeitpunktes für die Nachheizung mit Netzstrom (d.h. dem Zuschalten zumindest eines Heizelements zum zweiten Heizkreis), ist es möglich Zeiträume zu schaffen, innerhalb derer die alleinige Nutzung von alternativ produziertem Strom möglich ist, ohne dass dabei zum betreffenden Zeitpunkt Informationen über zukünftige Erträge aus alternativen Energien bekannt sein müssen oder dass auf Erfahrungswerte zurückgegriffen werden muss. Darüber hinaus ist ein Erreichen der Komfortbedingungen bei gleichzeitig optimaler Ausschöpfung des alternativen Energiepotentials möglich. Zudem erweist sich das gesamte Verfahren als äußerst flexibel gegenüber etwaigen Änderungen externer Bedingungen. Da weiterhin nur immer bei Erreichung einer Zielgröße, also bspw. eines ermittelten Startzeitpunktes für die Nachheizung, eine Neuberechnung stattfindet und gleichzeitig aufwändige Archivierungs- (bei Nutzung von Erfahrungswerten) oder Prognoseprozesse entfallen, vermindert sich der Rechenaufwand erheblich.

Optional kann das Verfahren den folgenden weiteren Schritt aufweisen:
- Vergleichen der aktuellen Wassertemperatur T₀ mit einer Abschaltkurve T_{Abs}(t), wobei die Abschaltkurve T_{Abs}(t) die Zieltemperatur Tₘᵢₙ zu dem Zeitpunkt tₛₒₗₗ aufweist und eine Steigung aufweist, die kleiner ist als eine Steigung der Einschaltkurve T_{ref}(t);
- Trennen des ersten Heizelements vom zweiten Heizkreis, wenn die aktuelle Wassertemperatur größer oder gleich einem aktuellen Wert der Abschaltkurve T_{Abs}(t) ist.

Vergleichen der aktuellen Wassertemperatur T₀ mit einer Abschaltkurve T_{Abs}(t) kann insbesondere durch Vergleichen der erfassten Wassertemperatur T₀ mit einem Temperaturwert auf der Abschaltkurve T_{Abs}(t) zum selben Zeitpunkt (d.h. mit einem aktuellen Wert der Abschaltkurve T_{Abs}(t)) ausgeführt werden.

Im Fall, dass nachdem bereits das erste Heizelement dem zweiten Heizkreis zugeschaltet werden musste, um die Komfortbedingungen mit Sicherheit erreichen zu können, dennoch Leistung aus dem ersten Heizkreis zur Verfügung steht, steigt die Wassertemperatur T₀ wieder auf einen Wert über der Einschaltkurve T_{ref}(t). In diesem Fall kann es zweckmäßig sein, wiederum beide Heizelemente dem ersten Heizkreis zuzuordnen und die Nachheizung abzuschalten, um nicht ohne Notwendigkeit Strom aus dem öffentlichen Stromnetz zu beziehen. Um jedoch ein häufiges Schalten der Schalteinrichtung (beispielsweise bei jedem Kreuzen der erfassten Wassertemperatur mit der Einschaltkurve T_{ref}(t)) zu verhindern, kann die (obere) Abschaltkurve vorgesehen sein. Die Abschaltkurve T_{Abs}(t) schneidet die Einschaltkurve T_{ref}(t) im Punkt (tₛₒₗₗ, Tₘᵢₙ), da nach Erreichen der Zieltemperatur zum Zeitpunkt tₛₒₗₗ ohnehin kein Nachheizen notwendig ist. Die Abschaltkurve T_{Abs}(t) kann zu jedem Zeitpunkt t vor dem Schnittpunkt über der Einschaltkurve T_{ref}(t) liegen, d.h. für jeden Vergleichszeitpunkt tₙ mit tₙ<tₛₒₗₗ gilt T_{ref}(tₙ) < T_{Abs}(tₙ). Die Abschaltkurve kann eine Gerade sein. Die Steigung der Gerade kann kleiner sein als eine Steigung der Einschaltkurve T_{ref}(t). Die Steigung der Einschaltkurve T_{ref}(t) kann proportional zu einer größten maximalen Heizleistung des ersten bzw. des zweiten Heizelements sein. Die Steigung der Abschaltkurve T_{Abs}(t) kann hingegen proportional zu einer kleinsten maximalen Heizleistung des ersten oder des zweiten Heizelements sein. Wenn demnach selbst ausschließlich mit dem Heizelement mit der kleinsten Heizleistung die Zieltemperatur erreicht werden kann, kann die Nachheizung abgeschaltet werden, indem wiederum alle Heizelemente dem ersten Heizkreis zugeordnet werden bzw. kein Heizelement dem zweiten Heizkreis zugeschaltet wird.

Optional kann der folgende weitere Schritt vorgesehen sein:
Zuschalten des ersten Heizelements und des zweiten Heizelements zum ersten Heizkreis nach Erreichen der Zieltemperatur Tₘᵢₙ.

Sobald die Zieltemperatur Tₘᵢₙ erreicht ist, ist ein Nachheizen mit Strom aus dem öffentlichen Netz ohnehin nicht mehr notwendig und auch nicht zweckmäßig, da dem Verbraucher damit unnotwendige Mehrkosten entstehen würden. Um jedoch die (lokal) erzeugte elektrische Energie aus alternativen elektrischen Energiequellen, beispielsweise Strom einer PV-Anlage auf dem Dach eines Einfamilienhauses, dennoch zu nutzen, kann der elektrische Warmwasserbereiter als Energiespeicher genutzt werden, und weiter mit Energie aus der alternativen elektrischen Energiequelle beladen werden.

Grundsätzlich ist es möglich, dass beispielsweise der Verbraucher die Komfortbedingungen während des Beladens des elektrischen Warmwasserbereiters kurzfristig ändert. Eine solche Anpassung kann beispielsweise eine Erhöhung der Zieltemperatur Tₘᵢₙ und/oder ein Vorverlegen des Bedarfszeitpunkts (d.h. Zeitpunkts tₛₒₗₗ) beinhalten. Eine solche Änderung kann dazu führen, dass die Komfortbedingung nunmehr kaum mittels einer Beladung mit Strom aus alternativen elektrischen Energiequellen zu erfüllen ist. Im Verfahren wird entsprechend die Einschaltkurve T_{ref}(t) angepasst, indem die Zieltemperatur und/oder der Bedarfszeitpunkt entsprechend angepasst werden. Durch eine solche (plötzliche) Anpassung kann die aktuelle Wassertemperatur (deutlich) unter der (angepassten) Einschaltkurve T_{ref}(t) liegen. In diesem Fall wird eine für die Erreichung der Zieltemperatur Tₘᵢₙ notwendige mittlere Gesamtheizleistung P berechnet. Sollte diese Leistung mit nur einem Heizelement erreichbar sein, wird folglich das dafür notwendige Heizelement dem zweiten Heizkreis und damit dem öffentlichen Netz zugeschaltet, während die übrigen Heizelemente dem ersten Heizkreis zugeordnet bleiben, um weiterhin auch Strom aus alternativen elektrischen Energiequellen verbrauchen zu können. Falls die notwendige mittlere Gesamtheizleistung P über der Heizleitung jedes einzelnen Heizelements liegt, werden entsprechend zwei oder mehrere Heizelemente (beispielsweise das erste und das zweite Heizelement) dem zweiten Heizkreis zugeschaltet, um die Zieltemperatur Tₘᵢₙ zum Zeitpunkt tₛₒₗₗ mit hoher Sicherheit erreichen zu können.

Die vorliegende Erfindung wird auch anhand der beigefügten Figuren näher erläutert.

Figur 1 zeigt schematisch ein Warmwasserbereitungssystem mit einem elektrischen Warmwasserbereiter;

Die Figuren 2 bis 5 zeigen schematisch Zeit-Temperatur-Diagramme, anhand derer ein Verfahren zur Regelung eines Warmwasserbereitungssystems illustriert werden soll.

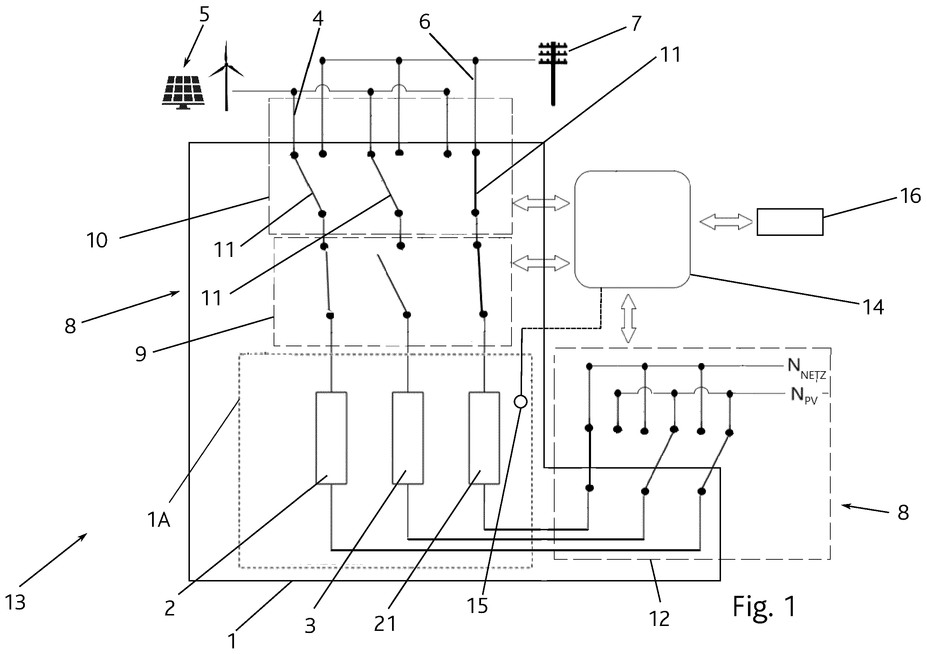

Fig. 1 zeigt schematisch einen elektrischen Warmwasserbereiter 1 aufweisend:
- einen Aufnahmebehälter 1A für Wasser;
- zumindest ein erstes Heizelement 2 und ein zweites Heizelement 3 zum Aufheizen von im Aufnahmebehälter 1 aufgenommenem Wasser;
- einen ersten elektrischen Heizkreis 4 und einen zweiten elektrischen Heizkreis 6;

- eine Schalteinrichtung 8, wobei die Schalteinrichtung 8 dazu eingerichtet ist, zumindest das erste Heizelement 2 und das zweite Heizelement 3 jeweils dem ersten elektrischen Heizkreis 4 oder dem zweiten elektrischen Heizkreis 6 oder keinem Heizkreis zuzuschalten.

Der erste Heizkreis 4 ist in diesem Ausführungsbeispiel mit einer alternativen elektrischen Energiequelle 5 verbunden. Der zweite Heizkreis 6 ist mit einem öffentlichen Stromnetz 7 verbunden.

In diesem Ausführungsbeispiel ist ein weiteres drittes Heizelement 21 vorgesehen, wobei die Schalteinrichtung 8 auch dazu eingerichtet ist, das dritte Heizelement 21 dem ersten elektrischen Heizkreis 4 oder dem zweiten elektrischen Heizkreis 6 oder keinem Heizkreis zuzuschalten.

Das erste Heizelement 2 weist eine größere Heizleistung auf als das zweite Heizelement 3. Das erste Heizelement 2 weist eine größere Heizleistung auf als das dritte Heizelement 21.

Die Schalteinrichtung 8 weist eine erste Schalteinheit 9 und eine zweite Schalteinheit 10 auf, wobei die erste Schalteinheit 9 dazu eingerichtet ist, zumindest das erste Heizelement 2 und das zweite Heizelement 3 einem von zumindest zwei Versorgungssträngen 11 zuzuschalten oder von diesem zu trennen und wobei die zweite Schalteinheit 10 dazu eingerichtet ist, die zumindest zwei Versorgungstränge 11 jeweils dem ersten elektrischen Heizkreis 4 oder dem zweiten elektrischen Heizkreis 6 zuzuschalten. Dadurch kann beispielsweise das erste Heizelement 2 entweder keinem Heizkreis und somit keiner Energiequelle zugschaltet werden, oder dem ersten Heizkreis 4 und somit der alternativen elektrischen Energiequelle 5 zugeschaltet werden, oder dem zweiten elektrischen Heizkreis 6 und somit dem öffentlichen Stromnetz 7 zugeschaltet werden. Dasselbe gilt jeweils auch für das zweite Heizelement 3 und das dritte Heizelement 21.

Die Schalteinrichtung 8 weist eine dritte Schalteinheit 12 auf, wobei die dritte Schalteinheit 12 dazu eingerichtet ist, zumindest das erste Heizelement 2 und das zweite Heizelement 3 einem Nullleiter N_{PV} des ersten Heizkreises 4 oder einem Nullleiter N_{Netz} des zweiten Heizkreises 6 zuzuschalten.

Der elektrische Warmwasserbereiter 1 ist Teil eines Warmwasserbereitungssystems 13. Das Warmwasserbereitungssystem 13 weist demnach den elektrischen Warmwasserbereiter 1 auf, sowie eine Steuerungseinheit 14 zur Steuerung der Schalteinrichtung **8.** Der elektrische Warmwasserbereiter 1 weist eine Temperaturmesseinrichtung 15 zur Erfassung einer Wassertemperatur T₀ von im Aufnahmebehälter 1A aufgenommenem Wasser auf. Die Steuerungseinheit 14 ist dazu eingerichtet, die Schalteinrichtung 8 in Abhängigkeit der erfassten Wassertemperatur T₀ zu steuern.

Die Schalteinrichtung 8 steht in bidirektionaler Verbindung mit der Steuerungseinheit 14, wobei die Schalteinrichtung 8 dazu eingerichtet ist, Steuerbefehle zur Verschaltung zumindest des ersten Heizelements 2 und des zweiten Heizelements 3 (sowie auch des dritten Heizelements 21 von der Steuerungseinheit 14 zu erhalten.

Die Steuerungseinheit 14 steht mit einer externen Einheit 16 in Verbindung (d.h. die Steuerungseinheit 14 und die externe Einheit 16 sind dazu eingerichtet, Daten auszutauschen), wobei die externe Einheit 16 dazu eingerichtet ist, Regelalgorithmen auszuführen und Steuerbefehle an die Steuerungseinheit 14 zu übermitteln.

Die Steuerungseinheit 14 ist dazu eingerichtet, die Schalteinrichtung 8 in Abhängigkeit der erfassten Wassertemperatur T₀ und einer Zieltemperatur Tₘᵢₙ zu einem Zeitpunkt tₛₒₗₗ zu steuern.

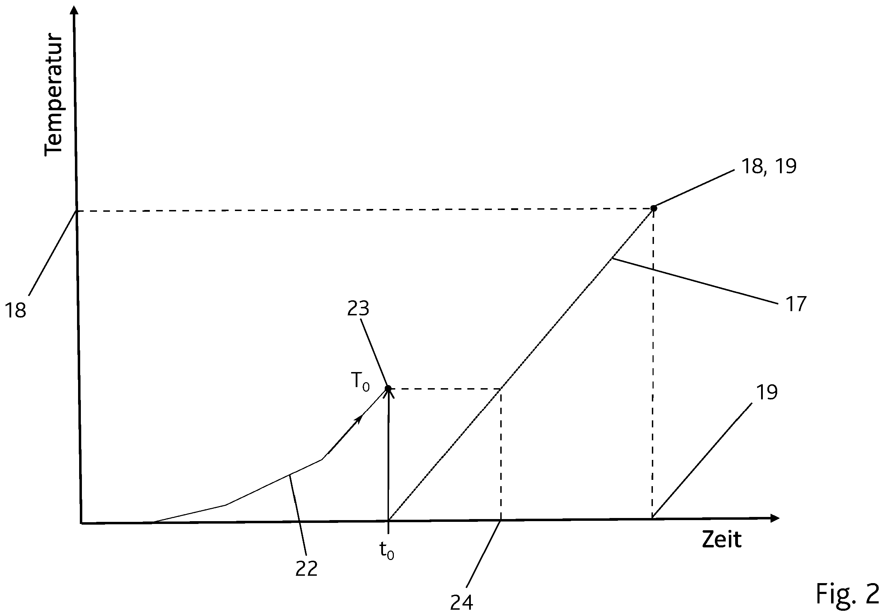

Die Steuerungseinheit 14 ist dazu eingerichtet, die Wassertemperatur T₀ mit einer Einschaltkurve T_{ref}(t) 17 zu vergleichen, wobei die Einschaltkurve T_{ref}(t) 17 die Zieltemperatur Tₘᵢₙ 18 zu dem Zeitpunkt tₛₒₗₗ 19 und eine Ausgangstemperatur T_{A} zu einem Ausgangszeitpunkt t_{A} aufweist (siehe Fig. 2).

In der dargestellten Konfiguration ist das erste Heizelement 2 dem ersten Heizkreis 4 und daher der alternativen elektrischen Energiequelle 5 zugeschaltet. Das erste Heizelement 2 ist demnach dem Nullleiter N_{PV} des ersten Heizkreises 4 zugeschaltet. Das zweite Heizelement 3 ist keinem Heizkreis zugeschaltet (siehe offener Kontakt in der ersten Schalteinheit 9) und wird demnach nicht mit Strom versorgt. Das dritte Heizelement 21 ist hingegen dem zweiten Heizkreis 6 und demnach dem öffentlichen Stromnetz 7 zugeschaltet. Das dritte Heizelement 21 ist demnach dem Nullleiter N_{NETZ} des zweiten Heizkreises 6 zugeschaltet.

Die Figuren 2 bis 5 zeigen schematisch Zeit-Temperatur-Diagramme, anhand derer ein Verfahren zur Regelung des Warmwasserbereitungssystems 13 illustriert werden soll.

Gemäß einem Ausgangszustand in Fig. 2 sind das erste Heizelement 2, das zweite Heizelement 3 und das dritte Heizelement 21 dem ersten Heizkreis 4 und somit der alternativen elektrischen Energiequelle 5 zugeschaltet. Die Heizelemente 2,3 und 21 sind mittels der Schalteinrichtung 8 entsprechend verschaltet. Die Wassertemperatur 22 des im Aufnahmebehälter 1A aufgenommenen Wassers wird mittels der Temperaturmesseinrichtung 15 erfasst. Der Anstieg und der Verlauf der Wassertemperatur hängen von der tatsächlich zur Verfügung stehenden Leistung der alternativen elektrischen Energiequelle 5 ab. Je mehr Leistung zur Verfügung steht, desto höher ist die Steigung und desto rascher kann eine Zieltemperatur Tₘᵢₙ 18 erreicht werden, die spätestens zu einem Zeitpunkt tₛₒₗₗ 19 erreicht werden soll. Der Verlauf der Wassertemperatur 22 folgt demnach nicht notwendigerweise einer Geraden, sondern spiegelt die Variabilität der tatsächlich zur Verfügung stehenden Heizleistung wider.

Das Verfahren zur Regelung des Warmwasserbereitungssystems weist die folgenden Schritte auf:
- Erfassen der aktuellen Wassertemperatur T₀ 23 von im Aufnahmebehälter 1 aufgenommenem Wasser;
- Vergleichen der erfassten Wassertemperatur T₀ 23 mit einer Einschaltkurve T_{ref}(t) 17;
- Steuern der Schalteinrichtung 8 in Abhängigkeit des Vergleichs der Wassertemperatur T₀ mit der Einschaltkurve T_{ref}(t) (17).

Dabei wird das erste Heizelement 2 dem zweiten Heizkreis 6 (und somit dem öffentlichen Netz 7) zugeschaltet, wenn die aktuelle Wassertemperatur T₀ 23 kleiner oder gleich einem aktuellen Wert der Einschaltkurve T_{ref}(t) 17 ist. Anderenfalls wird kein Schaltvorgang vorgenommen; alle Heizelemente 2, 3, 21 bleiben dem ersten Heizkreis 4 (oder keinem Heizkreis) zugeordnet.

Wenn die aktuelle Wassertemperatur T₀ (wie in Fig. 2 dargestellt) größer als der aktuelle Wert der Einschaltkurve T_{ref}(t) 17 ist, ist der folgende weitere Schritt vorgesehen: Ermitteln eines späteren Startzeitpunkts 24 in Abhängigkeit von der aktuellen Wassertemperatur T₀ 23 und der Einschaltkurve T_{ref}(t) 17, wobei zum späteren Startzeitpunkt 24 die oben zuerst genannten Schritte wiederholt werden. Vor dem späteren Startzeitpunkt 24 ist demnach keine Messung der Wassertemperatur und kein Vergleich mit der Einschaltkurve T_{ref}(t) 17 notwendig. Der spätere Startzeitpunkt 24 ist der (spätere) Zeitpunkt an dem die Einschaltkurve T_{ref}(t) 17 den Wert der aktuell erfassten Wassertemperatur T₀ aufweist.

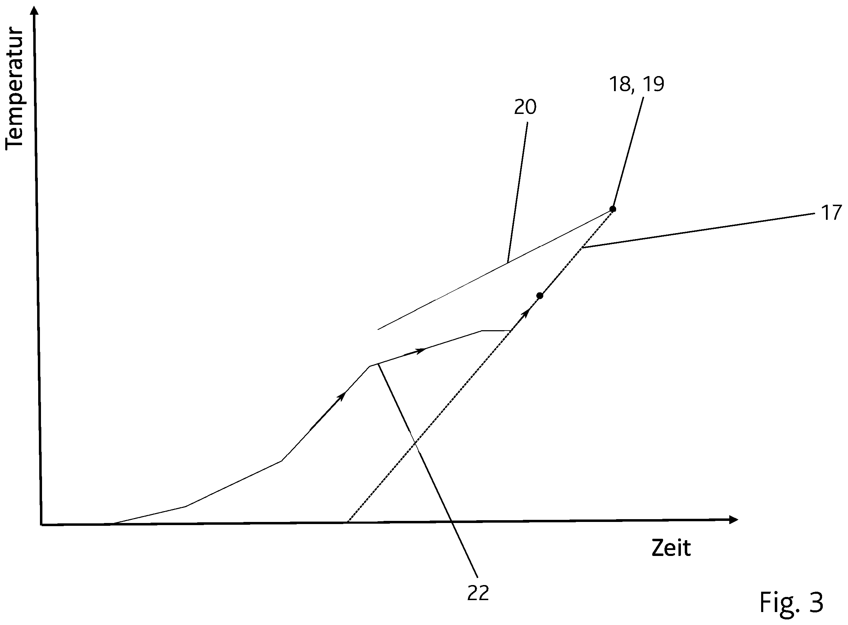

In Figur 3 ist der Fall dargestellt, dass die Wassertemperatur gleich einem entsprechenden (d.h. gleichzeitigen) Wert der Einschaltkurve T_{ref}(t) ist, folglich wurde das erste Heizelement 2 dem zweiten Heizkreis 6 und somit dem öffentlichen Netz 7 zugeschaltet. Die Einschaltkurve T_{ref}(t) 17 ist in diesem Ausführungsbeispiel eine Gerade. Die Steigung der Einschaltkurve T_{ref}(t) 17 ergibt sich aus der maximalen Heizleistung des ersten Heizelements 2, die durch die Versorgung mittels des öffentlichen Netzes 7 vollumfänglich ausgenutzt werden kann und zum Tragen kommt. Das zweite Heizelement 3 und das dritte Heizelement 21 bleiben dem ersten Heizkreis 4 zugeordnet, somit kann der elektrische Warmwasserbereiter 1 gleichzeitig mit Energie aus dem öffentlichen Netz 7 und Energie aus der alternativen elektrischen Energiequelle 5 beladen werden. Selbst im Fall, dass keine weitere Energie von der alternativen elektrischen Energiequelle 5 zur Verfügung gestellt werden kann, kann mittels der Beladung über das erste Heizelement 2 sichergestellt werden, dass die Zieltemperatur Tₘᵢₙ 18 (spätestens) zum Zeitpunkt tₛₒₗₗ 19 erreicht wird.

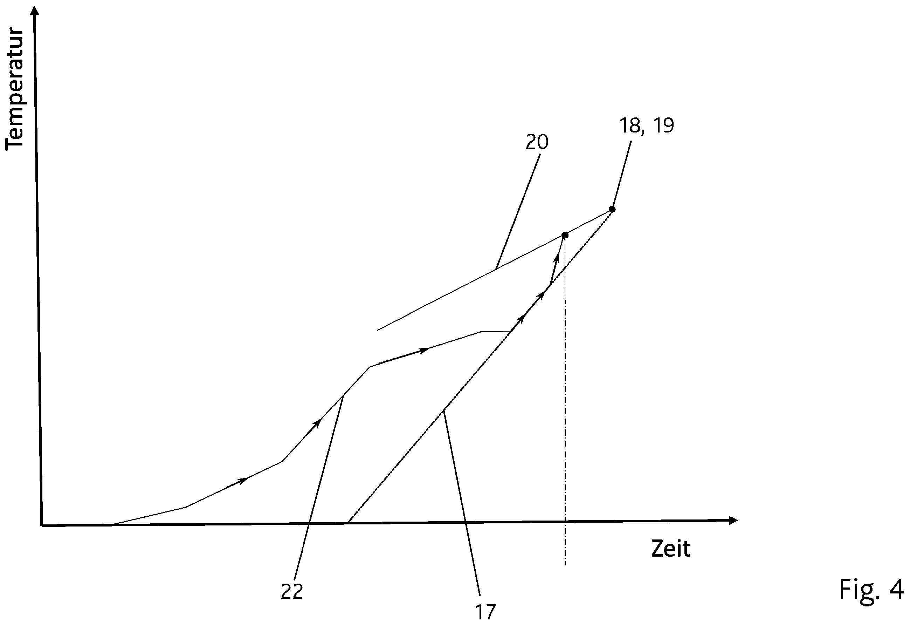

In Fig. 4 ist der Fall dargestellt, dass nachdem das erste Heizelement 2 dem zweiten Heizkreis 6 zugeschaltet wurde, ein Energieeintrag aus der alternativen elektrischen Energiequelle 5 über den ersten Heizkreis 4 und dem entsprechend zugeschalteten zweiten Heizelement 3 (und dem dritten Heizelement 21) zustande gekommen ist.

Das Verfahren weist in diesem Ausführungsbeispiel die folgenden weiteren Schritte auf:
- Vergleichen der aktuellen Wassertemperatur T₀ mit einer Abschaltkurve T_{Abs}(t) 20, wobei die Abschaltkurve T_{Abs}(t) 20 die Zieltemperatur Tₘᵢₙ 18 zu dem Zeitpunkt tₛₒₗₗ 19 aufweist und eine Steigung aufweist, die kleiner ist als eine Steigung der Einschaltkurve T_{ref}(t) 17;
- Trennen des ersten Heizelements 2 vom zweiten Heizkreis 6, wenn die aktuelle Wassertemperatur größer oder gleich einem aktuellen Wert der Abschaltkurve T_{Abs}(t) 20 ist.

Die Steigung der Abschaltkurve 20 ergibt sich aus der maximalen Heizleistung des zweiten Heizelements 3, das die kleineste Heizleistung der drei Heizelemente 2, 3 und 21 aufweist.

Sollte die Wassertemperatur aufgrund der nun mangelnden Versorgung mit Strom aus dem öffentlichen Netz 7 wiederum nicht rasch genug steigen, um die Zieltemperatur Tₘᵢₙ zum Zeitpunkt tₛₒₗₗ zu erreichen, wird wiederum das erste Heizelement 2 dem zweiten Heizkreis 6 zugeordnet, sobald die Wassertemperatur 22 gleich oder kleiner ist als ein entsprechender Wert der Einschaltkurve T_{ref}(t) 17.

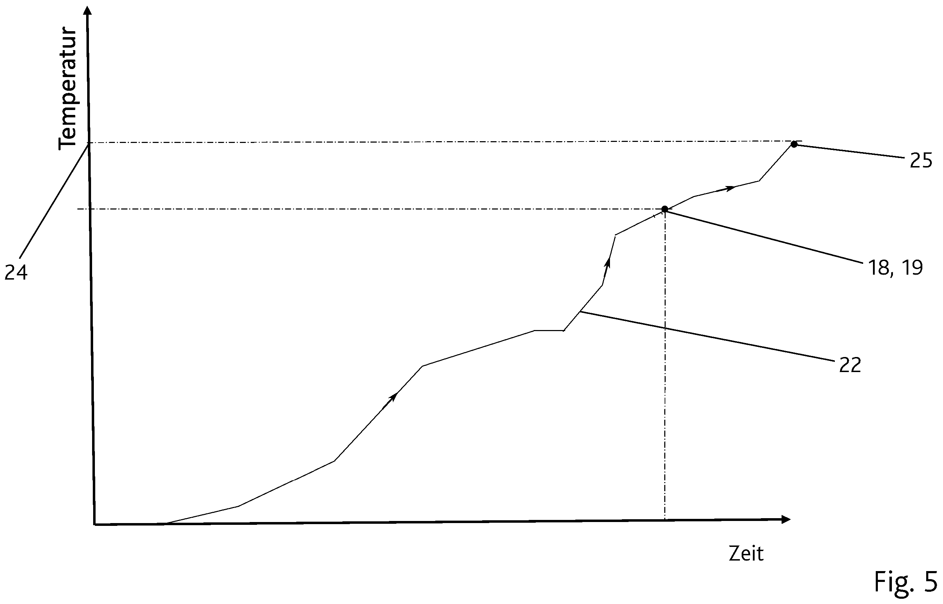

Figur 5 zeigt den Fall, dass die Zieltemperatur Tₘᵢₙ 18 zum Zeitpunkt tₛₒₗₗ 19 erreicht wird. Das Verfahren weist den weiteren Schritt auf:
- Zuschalten des ersten Heizelements 2 und des zweiten Heizelements 3 (und des dritten Heizelements 21) zum ersten Heizkreis 4 nach Erreichen der Zieltemperatur Tₘᵢₙ 18.

Somit kann von der alternativen elektrischen Energiequelle 5 erzeugte Energie solange zur Beladung des elektrischen Warmwasserbereiters 1 genutzt werden, bis die Wassertemperatur 22 einen maximal zulässigen Wert 25 erreicht. Bei Erreichen des maximal zulässigen Wertes werden alle Heizelemente 2, 3, und 21 von den Heizkreisen getrennt, um eine Überladung des elektrischen Warmwasserbereiters 1 über den maximal zulässigen Wert 25 (und somit eine etwaige Beschädigung des elektrischen Warmwasserbereiters 1) zu verhindern.

## Patentansprüche

1. Elektrischer Warmwasserbereiter (1) aufweisend:
- einen Aufnahmebehälter (1A) für Wasser;
- zumindest ein erstes Heizelement (2) und ein zweites Heizelement (3) zum Aufheizen von im Aufnahmebehälter (1) aufgenommenem Wasser;
- einen ersten elektrischen Heizkreis (4), insbesondere verbindbar mit einer alternativen elektrischen Energiequelle (5), und einen zweiten elektrischen Heizkreis (6), insbesondere verbindbar mit einem öffentlichen Stromnetz (7);
**gekennzeichnet durch**
- eine Schalteinrichtung (8), wobei die Schalteinrichtung (8) dazu eingerichtet ist, zumindest das erste Heizelement (2) und das zweite Heizelement (3) jeweils dem ersten elektrischen Heizkreis (4) oder dem zweiten elektrischen Heizkreis (5) oder keinem Heizkreis zuzuschalten.

2. Elektrischer Warmwasserbereiter (1) nach Anspruch 1 **dadurch gekennzeichnet, dass** das erste Heizelement (2) eine größere Heizleistung aufweist als das zweite Heizelement (3).

3. Elektrischer Warmwasserbereiter (1) nach Anspruch 1 oder Anspruch 2, **dadurch gekennzeichnet, dass** die Schalteinrichtung (8), eine erste Schalteinheit (9) und eine zweite Schalteinheit (10) umfasst, wobei die erste Schalteinheit (9) dazu eingerichtet ist, zumindest das erste Heizelement (2) und das zweite Heizelement (3) einem von zumindest zwei Versorgungssträngen (11) zuzuschalten oder von diesem zu trennen und wobei die zweite Schalteinheit (10) dazu eingerichtet ist, die zumindest zwei Versorgungstränge (11) jeweils dem ersten elektrischen Heizkreis (4) oder dem zweiten elektrischen Heizkreis (6) zuzuschalten.

4. Elektrischer Warmwasserbereiter (1) nach Anspruch 3, **dadurch gekennzeichnet, dass** die Schalteinrichtung (8) eine dritte Schalteinheit (12) aufweist, wobei die dritte Schalteinheit (12) dazu eingerichtet ist, zumindest das erste Heizelement (2) und das zweite Heizelement (3) einem Nullleiter des ersten elektrischen Heizkreises (4) oder einem Nullleiter des zweiten elektrischen Heizkreises (6) zuzuschalten.

5. Warmwasserbereitungssystem (13) mit einem elektrischen Warmwasserbereiter (1) nach einem der Ansprüche 1 bis 4, **gekennzeichnet durch** eine Steuerungseinheit (14) zur Steuerung der Schalteinrichtung (8), wobei der elektrische Warmwasserbereiter (1) eine Temperaturmesseinrichtung (15) zur Erfassung einer Wassertemperatur T₀ von im Aufnahmebehälter (1) aufgenommenem Wasser aufweist, wobei die Steuerungseinheit (14) dazu eingerichtet ist, die Schalteinrichtung (8) in Abhängigkeit der erfassten Wassertemperatur T₀ zu steuern.

6. Warmwasserbereitungssystem (13) nach Anspruch 5, **dadurch gekennzeichnet, dass** die Schalteinrichtung (8) in bidirektionaler Verbindung mit der Steuerungseinheit (14) steht, wobei die Schalteinrichtung (8) dazu eingerichtet ist, Steuerbefehle zur Verschaltung zumindest des ersten Heizelements (2) und des zweiten Heizelements (3) von der Steuerungseinheit (14) zu erhalten, wobei die Steuerungseinheit (14) vorzugsweise dazu eingerichtet ist, Regelalgorithmen auszuführen.

7. Warmwasserbereitungssystem (13) nach Anspruch 6, **dadurch gekennzeichnet, dass** die Steuerungseinheit (14) mit einer externen Einheit (16) in Verbindung steht, wobei die externe Einheit (16) dazu eingerichtet ist, Regelalgorithmen auszuführen und Steuerbefehle an die Steuerungseinheit (14) zu übermitteln.

8. Warmwasserbereitungssystem (13) nach einem der Ansprüche 5 bis 7, **dadurch gekennzeichnet, dass** die Steuerungseinheit (14) dazu eingerichtet ist, die Schalteinrichtung (8) in Abhängigkeit der erfassten Wassertemperatur T₀ und einer Zieltemperatur Tₘᵢₙ zu einem Zeitpunkt tₛₒₗₗ zu steuern.

9. Warmwasserbereitungssystem (13) nach Anspruch 8, **dadurch gekennzeichnet, dass** die Steuerungseinheit (14) dazu eingerichtet ist, die Wassertemperatur T₀ mit einer Einschaltkurve T_{ref}(t) (17) zu vergleichen, wobei die Einschaltkurve T_{ref}(t) (17) die Zieltemperatur Tₘᵢₙ (18) zu dem Zeitpunkt tₛₒₗₗ (19) und eine Ausgangstemperatur T_{A} zu einem Ausgangszeitpunkt t_{A} aufweist.

10. Warmwasserbereitungssystem (13) nach einem der Ansprüche 5 bis 9, **dadurch gekennzeichnet, dass** der erste Heizkreis (4) mit einer alternativen elektrischen Energiequelle (5) verbunden ist und der zweite Heizkreis (6) mit einem öffentlichen Stromnetz (7) verbunden ist.

11. Verfahren zur Regelung eines Warmwasserbereitungssystems (13) nach einem der Ansprüche 5 bis 10, **gekennzeichnet durch** die folgenden Schritte:
- Erfassen der aktuellen Wassertemperatur T₀ von im Aufnahmebehälter (1) aufgenommenem Wasser;
- Vergleichen der erfassten Wassertemperatur T₀ mit einer Einschaltkurve T_{ref}(t) (17);
- Steuern der Schalteinrichtung (8) in Abhängigkeit des Vergleichs der Wassertemperatur T₀ mit der Einschaltkurve T_{ref}(t) (17) .

12. Verfahren nach Anspruch 11, **dadurch gekennzeichnet, dass** zumindest das erste Heizelement (2) dem zweiten Heizkreis (6) zugeschaltet wird, wenn die aktuelle Wassertemperatur T₀ kleiner oder gleich einem aktuellen Wert der Einschaltkurve T_{ref}(t) (17) ist.

13. Verfahren nach Anspruch 12, **gekennzeichnet durch** den weiteren Schritt:
- wenn die aktuelle Wassertemperatur T₀ größer als ein aktueller Wert der Einschaltkurve T_{ref}(t) (17) ist: Ermitteln eines späteren Startzeitpunkts in Abhängigkeit von der aktuellen Wassertemperatur T₀ und der Einschaltkurve T_{ref}(t) (17), wobei zum späteren Startzeitpunkt die Schritte gemäß Anspruch 12 wiederholt werden.

14. Verfahren nach einem der Ansprüche 11 bis 13, **gekennzeichnet durch** den weiteren Schritt:
- Vergleichen der aktuellen Wassertemperatur T₀ mit einer Abschaltkurve T_{Abs}(t) (20), wobei die Abschaltkurve T_{Abs}(t) (20) die Zieltemperatur Tₘᵢₙ (18) zu dem Zeitpunkt tₛₒₗₗ (19) aufweist und eine Steigung aufweist, die kleiner ist als eine Steigung der Einschaltkurve T_{ref}(t) (17);
- Trennen des ersten Heizelements (2) vom zweiten Heizkreis (6), wenn die aktuelle Wassertemperatur größer oder gleich einem aktuellen Wert der Abschaltkurve T_{Abs}(t) (20) ist.

15. Verfahren nach einem der Ansprüche 11 bis 14, **gekennzeichnet durch** den weiteren Schritt:
- Zuschalten des ersten Heizelements (2) und des zweiten Heizelements (3) zum ersten Heizkreis (4) nach Erreichen der Zieltemperatur Tₘᵢₙ (18).
